# EUROPÄISCHE PATENTSCHRIFT

(11) **EP 3 824 612 B1**
(45) Veröffentlichungstag und Bekanntmachung des Hinweises auf die Patenterteilung: **12.07.2023**
(21) Anmeldenummer: 19765631.7
(22) Anmeldetag: 18.07.2019
(51) Int. Cl.: H04L 9/40, G06F 21/57, H04L 67/563, H04L 67/59, G06F 11/36

(54) **PENETRATIONSTESTVERFAHREN, COMPUTERPROGRAMM UND VORRICHTUNG ZUR DATENVERARBEITUNG**
PENETRATION TEST METHOD, COMPUTER PROGRAM AND DEVICE FOR DATA PROCESSING
PROCÉDÉ D'ESSAI DE PÉNÉTRATION, PROGRAMME INFORMATIQUE ET DISPOSITIF DE TRAITEMENT DE DONNÉES

(30) Priorität: 18.07.2018 CH 8862018
(43) Veröffentlichungstag der Anmeldung: 26.05.2021
(73) Patentinhaber: Consecom AG, 8002 Zurich (CH)
(72) Erfinder: RUF, Lukas, 8002 Zürich (CH); ESPOSITO, Damiano, 8580 Amriswil (CH); RENNHARD, Marc, 8308 Illnau (CH)
(74) Vertreter: Latscha Schöllhorn Partner AG
(86) Internationale Anmeldenummer: PCT/EP2019/069331
(87) Internationale Veröffentlichungsnummer: WO 2020/016340

(56) Entgegenhaltungen:
- US-A1- 2013 160 117
- US-A1- 2015 237 063
- US-B1- 8 752 183

## Beschreibung

### Technisches Gebiet

Die Erfindung betrifft ein computerimplementiertes Penetrationstestverfahren zum Prüfen der Vulnerabilität eines Computersystems sowie ein Computerprogramm und eine Vorrichtung zur Datenverarbeitung zum Implementieren eines solchen Penetrationstestverfahrens.

### Stand der Technik

In vielen Systemen werden heutzutage Anwendungen beziehungsweise Dienste über Netzwerke zur Verfügung gestellt. Mit dem Aufkommen und der weitgehenden Verbreitung des Internets können solche Anwendungen praktisch weltweit genutzt werden. Insbesondere das World Wide Web (W3 oder WWW) ermöglicht dabei über eine standardisierte oder zumindest geordnete und strukturierte Kommunikation eine einfache und effiziente Verbreitung und weite Zugänglichkeit von solchen Anwendungen und Diensten. Dazu werden die Anwendungen und Dienste typischerweise als Webapplikationen auf einem oder mehren Server-Computern zur Verfügung gestellt und mittels eines Browserprogramms auf einem Nutzergerät abgerufen. Browserprogramme können über bekannte Protokolle mittels Auszeichnungssprachen wie beispielsweise die Hypertext Markup Language (HTML), Scriptbefehlen wie beispielsweise JavaScript und/oder Programmierbefehlen von Browser-Plugin-Programmen wie beispielsweise das Java Runtime Environment (JRE) als Clientprogramme der Webapplikationen genutzt werden.

Ein verbreitetes Problem bei Netzwerkapplikation im Allgemeinen und Webapplikation im Speziellen ist die Sicherheit. Da Computersysteme, die solche Webapplikationen bereitstellen über das Internet beziehungsweise W3 erreichbar sind, wird beispielsweise zum Entwenden von Daten oder Missbrauchen der Computersysteme häufig versucht, über die Webapplikationen in das Computersystem einzudringen.

Um das zu verhindern, sind vielerlei Sicherheitmassnahmen wie beispielsweise Firewalls oder ein Virenschutz bekannt. Da die Webapplikationen und auch die Computersysteme selbst zunehmend komplexer und vernetzter werden, treten aber trotzdem immer wieder Schwachstellen auf, die missbraucht werden können.

Um die Sicherheit von an Netzwerke beziehungsweise das Internet angeschlossener Computersysteme zu prüfen ist es bekannt, gezielt ein zu prüfendes Computersystem zumeist über eine darauf laufende Netzwerkapplikation beziehungsweise Webapplikation anzugreifen (Ethical Hacking). Mittels solcher Penetrationstests können Schwachstellen in der Sicherheit von Computersystemen aufgedeckt und behoben werden.

Zur effizienten und automatisierten Prüfung von Computersystemen werden heutzutage auch Schwachstellentestmaschinen eingesetzt, die ein umfassendes automatisiertes Testen ermöglichen. Dabei sind verschiedene solche Schwachstellentestmaschinen bekannt, die über spezifische proprietäre Computeranwendungen wie beispielsweise Arachni, OWASP ZAP, Skipfish, Wapiti oder w3af als Werkzeuge implementiert sind.

Bekannte Schwachstellentestmaschinen haben ihre Stärken und Schwächen. Das Anwenden von mehreren Schwachstellentestmaschinen kann eine Verbesserung beziehungsweise Ergänzung zu den Schwächen bestimmter Schwachstellentestmaschinen bieten. In vielen Fällen ist jedoch eine solches mehrfaches Verwenden von mehreren Schwachstellentestmaschinen zu aufwendig. Auch liefern bekannte Schwachstellentestmaschinen üblicherweise unterschiedliche Auswertungsresultate, die sich nur schwierig vergleichen oder vereinen lassen. Zudem bleiben die Schwächen bei den jeweiligen Schwachstellentestmaschinen auch vorhanden, wenn verschiedene eingesetzt werden.

Der vorliegenden Erfindung liegt daher die Aufgabe zu Grunde, ein System vorzuschlagen, das eine gegenüber den bekannten Prüfverfahren für Computersysteme verbesserte Qualität bietet und eine höhere Effizienz in der Ausführung beziehungsweise Auswertung ermöglicht.

Das US Patent US8752183 ist weiterer Stand der Technik.

### Darstellung der Erfindung

Die Aufgabe wird erfindungsgemäss durch ein computerimplementiertes Penetrationstestverfahren gelöst, wie es im unabhängigen Anspruch 1 definiert ist, sowie durch ein Computerprogramm, wie es im unabhängigen Anspruch 10 definiert ist, und eine Vorrichtung zur Datenverarbeitung, wie sie im unabhängigen Anspruch 11 definiert ist. Vorteilhafte Ausführungsvarianten der Erfindung ergeben sich aus den abhängigen Ansprüchen.

In einem Aspekt ist die Erfindung ein computerimplementiertes Penetrationstestverfahren mit dem die Vulnerabilität eines Computersystems geprüft wird. Das Penetrationstestverfahren umfasst die folgenden Schritte: (i) Bereitstellen eines Proxydienstes auf einem Computer, wobei der Proxydienst ein Verbindungsframework umfasst, das dazu ausgestaltet ist, den Proxydienst mit einer Mehrzahl von Schwachstellentestmaschinen zu verbinden; (ii) Beziehen eines Adressdatensignals, das eine Netzwerkadresse einer auf dem zu prüfenden Computersystem ausgeführten Netzwerkapplikation in einem Netzwerk repräsentiert;
(iii) Ermitteln von zusätzlichen Netzwerkadressen der Netzwerkapplikation im Netzwerk;
(iv) Erhalten von initialen Anfragedatensignalen von den Schwachstellentestmaschinen durch den beziehungsweise auf dem Proxydienst über das Verbindungsframework des Proxydienstes, wobei die initialen Anfragedatensignale jeweils eine initiale Anfrage der zugehörigen Schwachstellentestmaschinen an die Netzwerkapplikation repräsentiert;
(v) Weiterleiten der initialen Anfragedatensignale an die Netzwerkapplikation durch den Proxydienst über das Netzwerk; (vi) Erhalten initialer Antwortdatensignale auf das weitergeleitete initiale Anfragedatensignals von der Netzwerkapplikation durch den Proxydienst über das Netzwerk, wobei die initialen Antwortdatensignal jeweils eine initiale Antwort der Netzwerkapplikation auf die initiale Anfrage der zugehörigen Schwachstellentestmaschine repräsentiert; (vii) Erzeugen erweiterter initialer Antwortdatensignale durch den Proxydienst über Hinzufügen der zusätzlichen Netzwerkadressen in die initialen Antwortdatensignale; und (viii) Übermitteln der erweiterten initialen Antwortdatensignale an die Mehrzahl von Schwachstellentestmaschinen.

Obwohl die Schritte des Penetrationstestverfahren vorstehen mit den Nummern (i) bis (viii) versehen sind, ist dies nicht als zwingende Sequenz beziehungsweise Abfolge dieser Schritte zu verstehen. Die Schritte können zwar in dieser Reihenfolge ablaufen, andere Reihenfolgen sind aber auch denkbar.

Der Begriff "Penetrationstest" bezieht sich im Zusammenhang mit der Erfindung auf einen umfassenden Sicherheitstest von einem oder mehreren Computern beziehungsweise Rechner oder Netzwerken jeglicher Grösse. Insbesondere kann in der Informationstechnik darunter die Prüfung der Sicherheit möglichst aller Systembestandteile und Anwendungen eines Netzwerks oder Computersystems mit Mitteln und Methoden, die ein Angreifer beziehungsweise Hacker anwenden würde, um unautorisiert in das System einzudringen (Penetration), verstanden werden. Penetrationstests können unter Verwendung von Werkzeugen, die möglichst viele Angriffsmuster nachbilden, die Empfindlichkeit eines zu testenden Systems gegen Hackerangriffe ermitteln und eingrenzen. Der Einfachheit halber wird nachfolgend das Penetrationstestverfahren auch als "Pentest" bezeichnet.

Unter dem Begriff "Vulnerabilität" beziehungsweise Verwundbarkeit kann im Zusammenhang mit zu prüfenden Computersystemen das Vorhandensein einer Schwachstelle verstanden werden, die von einem Angreifer ausgenutzt werden kann, um das Computersystem anzugreifen beziehungsweise zu penetrieren. Somit kann eine Vulnerabilität beziehungsweise Verwundbarkeit eine dem Angreifer exponierte Schwachstelle sein. Die Empfindlichkeit beziehungsweise Schadensanfälligkeit des Computersystems kann als Exposition bezeichnet werden. Dabei ist ein Computersystem mit einer hohen Exposition anfälliger auf Schäden, die durch ein ungewolltes Eindringen in das System durch einen Angreifer verursacht werden, als ein System mit einer tiefen Exposition.

Der Begriff "Schwachstellentestmaschine" bezieht sich im Zusammenhang mit der Erfindung auf eine Maschine, welche Mechanismen und Methoden bereitstellt, um Schwachstellen in Netzwerkapplikationen zu identifizieren und die Schwere der aus einer solchen Schwachstelle resultierenden Verwundbarkeit zu beurteilen. Die Maschine kann mittels eines passenden Computerprogramms als Schwachstellentestmaschine konfiguriert sein.

Unter dem Begriff "Schwachstelle" kann eine konzeptionelle oder implementatorische Unzulänglichkeit bezeichnet werden, welche die Funktionsfähigkeit der Netzwerkapplikation oder des Computersystems beeinträchtigen kann, falls sie durch einen Angreifer oder fahrlässigen Benutzer ausgenutzt wird, oder welche einen nicht autorisierten Zugriff auf Daten des Computersystems ermöglicht.

Der Begriff "Computersystem" bezieht sich im Zusammenhang mit der Erfindung auf eine oder mehrere zusammenhängende Vorrichtung(en), die typischerweise über ein Netzwerk oder auch in anderer Form zugänglich sind. Beispielsweise kann ein Computersystem ein einzelner Computer beziehungsweise Rechner sein, ein Netzwerk mit Komponenten wie beispielsweise Switches, Router oder ähnliche, eine Mehrzahl von vernetzten Computern oder eine beliebige Kombination davon. Insbesondere kann das Computersystem ein oder mehrere an das Internet angeschlossener und beispielsweise über das World Wide Web (W3 oder WWW) zugänglicher Computer sein.

Unter dem Begriff "Computer" wird hier eine beliebige elektronische Datenverarbeitungsvorrichtung verstanden. Der Begriff Computer umfasst einzelne Geräte wie beispielsweise Laptopcomputer, Desktopcomputer, Servercomputer, Tablets, Smartphones, in andere Geräte eingebettete Systeme (Embedded Systems) oder ähnliche. Er deckt auch kombinierte solche Vorrichtungen beziehungsweise Computerverbunde ab, wie beispielsweise verteilte Systeme mit Komponenten an unterschiedlichen Orten. Typischerweise sind Computer aus verschiedenen Bausteinen beziehungsweise Komponenten zusammengestellt wie beispielsweise Prozessoren (CPU), permanenten Datenspeichern mit einem Aufzeichnungsmedium wie einer Harddisk, einem Flash-Speicher oder etwas ähnlichem, Direktzugriffspeichern (RAM), Festwertspeichern (ROM), Kommunikationsadaptern wie USB-Adaptern, LAN-Adaptern, WLAN-Adaptern, Bluetooth-Adaptern oder ähnlichen, Benutzerschnittstellen wie Tastaturen, Mäusen, berührungsempfindlichen Bildschirmen (Touchscreens), Bildschirmen, Mikrofonen, Lautsprechern, und weitere andere Komponenten. Dabei können Computer in sehr unterschiedlichen Ausführungsformen aus den vorstehenden Komponenten und/oder weiteren Komponenten zusammengestellt sein. Computer werden hier auch als Rechner bezeichnet.

Unter dem Begriff "Proxy" wird hier eine Kommunikationsschnittstelle beziehungsweise -komponente in einem Netzwerk verstanden. Proxys arbeiten typischerweise als Vermittler, die auf der einen Seite Anfragen entgegennehmen, um dann über eigene Adressen eine Verbindung zur anderen Seite herzustellen.

Unter dem Begriff "Dienst" wird in diesem Zusammenhang eine technische Einheit verstanden, die Funktionalitäten bereitstellt beziehungsweise bündelt und über definierte Schnittstellen anderen Einheiten zur Verfügung stellt. Ein Proxydienst kann in einer Kommunikationsschnittstelle Funktionalitäten anbieten beziehungsweise Funktionen übernehmen. Ein Dienst kann in einer oder mehreren Instanzen ausgeführt beziehungsweise implementiert werden. Beispielsweise kann der Proxydienst in einer Instanz pro Schwachstellentestmaschine ausgeführt sein.

Unter dem Begriff "Framework" kann im Zusammenhang mit dem Proxydienst ein Programm-, Vorrichtungs- oder Schaltungsgerüst verstanden werden, das Anwendungskomponenten beziehungsweise -funktionalitäten bereitgestellt.

Unter dem Begriff "Beziehen" wird im Zusammenhang mit dem Adressdatensignal oder auch anderen Datensignalen ein aktives oder passives Erhalten verstanden. Beispielsweise kann dieser Begriff umfassen, dass eine Komponente ein Datensignal auf einer anderen Komponente abruft (aktiv) oder dass die eine Komponente das Datensignal von der anderen Komponente zugesandt erhält (passiv). Im Zusammenhang mit der Netzwerkadresse kann das Beziehen insbesondere eine Eingabe durch einen Nutzer über eine passende Schnittstelle umfassen.

Unter dem Begriff "Netzwerkadresse" wird hier eine Ortung verstanden, über welche die Netzwerkapplikation im Netzwerk gefunden werden kann. Beispielsweise kann die Netzwerkadresse eine Internetprotokoll (IP) Adresse sein. Im W3 kann sie insbesondere ein Uniform Resource Locator (URL) der zu prüfenden Netzwerkapplikation beziehungsweise Webapplikation sein.

Unter dem Begriff "Netzwerk" wird hier insbesondere ein Rechnernetzwerk verstanden. Ein solches Netzwerk ist typischerweise ein Zusammenschluss verschiedener elektronischer Systeme oder Komponenten, die primär selbstständig sein können. Beispielsweise können solche Netzwerkkomponenten Computer, Switches, Telefonen, Sensoren oder sonstige Komponenten sein. Die Kommunikation in Netzwerken erfolgt typischerweise über definierte Protokolle. Zum Zusammenschluss der Netzwerkkomponenten sind diese typischerweise mit einem Netzwerkadapter oder einem Bus ausgestattet, die über Kabel beziehungsweise Leitungen und/oder kabellos miteinander verbunden sind.

Unter dem Begriff "Datensignal" im Zusammenhang mit der Erfindung wird eine mess- beziehungsweise erfassbare physikalische Grösse beziehungsweise eine Sequenz von solchen Grössen verstanden, die so ausgeprägt ist, dass sie für eine Information stehen beziehungsweise eine Information repräsentieren kann. Insbesondere sind Signale im Zusammenhang mit Computersystemen und Netzwerken beispielsweise elektrische Spannungen, Schalldrucke, elektromagnetische Wellen, Feldstärken, Sequenzen davon oder auch beliebige Kombinationen davon. In jedem Fall sind Datensignale erfass- und eindeutig bestimmbar, damit ihre Information ermittelt werden kann. Datensignale können binäre Datensignale, digitale elektronische Signale, elektromagnetische Signale oder Kombinationen davon sein.

Der Begriff "repräsentieren" im Zusammenhang mit Datensignalen bezieht sich auf ein Vorhandensein einer Information wie beispielsweise der Netzwerkadresse. Dabei schliesst dieser Begriff nicht aus, dass neben der explizit aufgeführten Information auch noch andere Informationen im Datensignal enthalten sind. Beispielsweise können Datensignale eine Information repräsentieren, indem sie auf eine vorbestimmte Art und Weise beschaffen sind, sodass die Information dem Datensignal wieder entnommen werden kann.

Beim Beziehen, Erhalten, Übermitteln, Weiterleiten oder Ähnlichem von Datensignalen werden physikalische Grössen auf den betroffenen Geräten verändert. Beispielsweise kann zum kabellosen Übermitteln oder Weiterleiten eines Datensignals eine Serie elektromagnetischer Wellen von einer Komponente erzeugt und von einer anderen Komponente erfasst werden, wobei die Serie elektromagnetischer Wellen auf eine dem Sender und Empfänger bekannte Weise eine Information enthält. Oder in einer verkabelten Version kann eine Spannungsserie beziehungsweise eine Stromstärkenserie von einer Komponente über ein Kabel zur anderen transferiert werden.

Der Begriff "initial" im Zusammenhang mit den Anfragen und Antworten beziehungsweise deren zugehörigen Datensignalen bezieht sich auf einen dem eigentlichen Testen beziehungsweise Angreifen durch die Schwachstellentestmaschinen vorgeschalteten Lauf. Typischerweise ist die initiale Anfrage einer Schwachstellentestmaschine deren erste Anfrage an die Netzwerkapplikation, worauf diese eine erste Antwort beispielsweise in Form einer HTML Seite als Antwort zurückgibt. Diese initiale Antwort wird untersucht beispielsweise auf vorhandene Netzwerkadressen beziehungsweise URL, über welche die Netzwerkadresse erreicht werden kann. Darauf aufbauend sendet die Schwachstellentestmaschine dann die eigentlichen Testanfragen zum Ermitteln von Schwachstellen an die Netzwerkapplikation. Die Anzahl Testanfragen kann pro Schwachstellentestmaschine hoch sein, beispielsweise in der Grössenordnung von über einer Million Testanfragen, welche die Netzwerkapplikation mit einer entsprechenden Anzahl Antworten erwidert.

Das erfindungsgemässe Verfahren ermöglicht es, eine Vielzahl von Schwachstellentestmaschinen parallel die Netzwerkapplikation prüfen zu lassen. Dabei koordiniert der Proxydienst die Schwachstellenprüfmaschinen beziehungsweise deren Interaktion mit der Netzwerkapplikation. Dadurch kann die Effizienz und Qualität des automatisierten Prüfens der Vulnerabilität des Computersystems bereits wesentlich erhöht werden.

Zudem können über das Ermitteln von zusätzlichen Netzwerkadressen der Netzwerkapplikation im Netzwerk und das Speisen dieser zusätzlichen Netzwerkadressen in die initialen Antwortdatensignale die den Schwachstellentestmaschinen zugeführten Informationen verbessert und vereinheitlicht werden. Die Schwachstellentestmaschinen können so die Netzwerkapplikation mittels eines einheitlichen und verhältnismässig umfassenden Satzes an Netzwerkadressen über verschiedene Angriffspunkte testen. Dabei können Unterschiede im Umfang und der Qualität von Netzwerkanfragen durch die Schwachstellentestmaschinen reduziert oder gar vermieden werden.

Das erfindungsgemässe Penetrationstestverfahren ermöglicht also eine gegenüber bekannten (semi-)automatischen Prüfverfahren für Computersysteme wesentlich höhere Effizienz in der Ausführung und eine verbesserte Qualität des Prüfens selbst. Die Wahrscheinlichkeit, dass vorhandene Schwachstellen im Computersystem so gefunden werden, kann also wesentlich erhöht werden, sodass die Sicherheit des geprüften Computersystems verbessert werden kann.

Das Erzeugen der erweiterten initialen Antwortdatensignale durch den Proxydienst über Hinzufügen der zusätzlichen Netzwerkadressen in die initialen Antwortdatensignale - also Schritt (vii) - kann auf verschiedene Art und Weise erfolgen. Unter anderem können dazu von der Netzwerkapplikation in den initialen Antwortdatensignalen bereitgestellte Informationen über die Webapplikation beziehungsweise Metainformationen ergänzt werden. Bei Webapplikationen können beispielsweise die von den initialen Antwortdatensignalen repräsentierten Dateien robots.txt und/oder sitemap.xml mit den zusätzlichen URL ergänzt werden.

Alternativ oder zusätzlich kann zum Ermöglichen des Erzeugens der erweiterten initialen Antwortdatensignale auch das Adressdatensignal vorab individualisiert werden. Die Schwachstellentestmaschinen übermitteln dann die individualisierte Netzwerkadresse in den initialen Anfragedatensignalen an den Proxydienst. Der Proxydienst leitet die initialen Anfragedatensignale mit der ursprünglichen Netzwerkadresse und ändert die von der Netzwerkapplikation zurückgesendeten Antwortdatensignale wieder ab, um die eine Antwort auf die individualisierte Netzwerkadresse zu repräsentieren. Beispielsweise kann bei einer Webapplikation die den Schwachstellentestmaschinen zugeführte URL individualisiert werden, z.B. von http://www.example.com zu http://www.example.com/landing.page, die Schwachstellentestmaschinen übersenden dann diese individualisierte URL an den Proxydienst, der daraus wiederum die original URL erstellt und die entsprechenden Anfragen an die Webapplikation absendet. Die Antworten der Webapplikationen werden dann vom Proxydienst mit den zusätzlichen URL versehen, wieder individualisiert und an die Schwachstellentestmaschinen zurückgesendet.

Wiederum alternativ oder zusätzlich dazu kann das Erzeugen der erweiterten initialen Antwortdatensignale durch den Proxydienst erfolgen, indem der Proxydienst die von den Antwortdatensignalen repräsentierte Haupt- oder Basisantwort angepasst wird. Bei Webapplikationen kann beispielsweise die Hauptantwort auf die initiale Anfrage, z.B. die erste Seite index.html, geändert beziehungsweise ergänzt werden.

Vorzugsweise umfasst das Penetrationstestverfahren weiter die Schritte: Bereitstellen einer Steuerungskomponente auf dem Computer, wobei die Steuerungskomponente ein Verbindungsframework aufweist, das dazu ausgestaltet ist, die Steuerungskomponente mit der Mehrzahl von Schwachstellentestmaschinen zu verbinden; Erzeugen eines Aufrufdatensignals aus dem Adressdatensignal durch die Steuerungskomponente; und Weiterleiten des Aufrufdatensignals an die Mehrzahl von Schwachstellentestmaschinen durch die Steuerungskomponente über das Verbindungsframework der Steuerungskomponente, wobei die Schwachstellentestmaschinen aufgrund des Aufrufdatensignals die initialen Anfragedatensignale über das Verbindungsframework des Proxydienstes an den Proxydienst übermitteln. Eine solche Steuerungskomponente ermöglicht es gewisse Schritte des Penetrationstestverfahrens an geeigneter Stelle auszuführen. Dadurch können Funktionen zur Ausführung dieser Schritte effizient bereitgestellt werden. Zudem kann auch der Proxydienst vergleichsweise schlank beziehungsweise kompakt gehalten werden, sodass die Performance des gesamten Systems vergleichsweise hoch sein kann.

Indem die Steuerungskomponente das Verbindungsframework aufweist kann es effizient mit jeder der Mehrzahl von Schwachstellentestmaschinen kommunizieren und diese ansteuern. Dabei kann das Verbindungsframework das Gleiche sein, wie das des Proxydienstes. Aus Effizienzgründen sind die beiden Komponenten jedoch vorteilhafterweise mit eigenen Verbindungsframeworks ausgestattet.

Da die Steuerungskomponente das Aufrufdatensignal erzeugt und dieses dann an die Schwachstellentestmaschinen weiterleitet beziehungsweise übermittelt, kann die Steuerungskomponente den Prüfvorgang initiieren und von Beginn an die Kontrolle über den Ablauf des Penetrationstestverfahren haben.

Neben dem Erzeugen und Weiterleiten des Aufrufdatensignals führt die Steuerungskomponente vorzugsweise auch den oben beschriebenen Schritt (iii) des Penetrationstestverfahren aus. Dabei erzeugt die Steuerungskomponente ein Adresskonfigurationsdatensignal, das an den Proxydienst übermittelt wird.

Indem die Steuerungskomponente zentral die zusätzlichen Netzwerkadressen ermittelt, können vergleichsweise umfangreiche Abklärungen beziehungsweise Auswertungen ausgeführt werden, ohne dass der Proxydienst damit belastet wird. Die Resultate dieser Abklärungen und Auswertungen der Steuerungskomponente werden dann im Adresskonfigurationsdatensignal dem Proxydienst zur Verfügung gestellt. Dabei können neben den zusätzlichen Netzwerkadressen auch weitere Information von der Steuerungskomponente an den Proxydienst übermittelt werden.

Das Adresskonfigurationsdatensignal kann an den Proxydienst übermittelt werden, indem seine Informationen an einem Ort gespeichert werden, wo sie vom Proxydienst abgerufen werden können. Beispielsweise können das Adresskonfigurationsdatensignal ein Speichern der zusätzlichen Netzwerkadressen in einer Datenbank oder einer in einem Dateisystem abgelegten Konfigurationsdatei, wo sie vom Proxydienst zum Erzeugen der erweiterten Antwortdatensignale abgeholt werden können.

Vorzugsweise bezieht die Steuerungskomponente Auswertungsdatensignale von jeder der Schwachstellentestmaschinen, wobei die Auswertungsdatensignale jeweils eine Auswertung der Antwortdatensignale jeweils durch die zugehörige Schwachstellentestmaschine repräsentieren.

Schwachstellentestmaschinen sind typischerweise dazu ausgebildet, die Resultate ihrer Testläufe - also ihrer umfangreichen Testanfragen an die und -antworten von der Netzwerkapplikation - auszuwerten beziehungsweise zusammenzustellen. Indem die Steuerungskomponente dazu ausgestaltet ist, die Auswertungsdatensignale von den Schwachstellentestmaschinen zu beziehen, kann sie die Auswertungen aller Schwachstellentestmaschinen zentral sammeln.

Dabei aggregiert die Steuerungskomponente vorzugsweise die Auswertungsdatensignale der Schwachstellentestmaschinen zu einem Masterauswertungsdatensignal. Insbesondere kann die Steuerungskomponente die in den Auswertungsdatensignalen enthaltenen Auswertungen normalisieren, aggregieren und korrelieren, sodass sie in einer Masterauswertung zusammengefasst werden können. Die Masterauswertung wird vom Masterauswertungsdatensignal repräsentiert, mit dem wiederum weitere Aktionen ausgelöst werden können. Beispielsweise kann es zur Erstellung eines Gesamtberichts über den Sicherheitszustand des Computersystems verwendet werden. Oder es kann zum automatisierten Schliessen von erkannten Sicherheitslücken eingesetzt werden.

Vorzugsweise umfasst Schritt (iii) des Penetrationstestverfahren die Unterschritte: (iii-1) Weiterleiten eines Crawler-Aufrufdatensignals an eine ausgewählte Schwachstellentestmaschine der Mehrzahl von Schwachstellentestmaschinen; (iii-2) Erhalten eines Crawler-Anfragedatensignals von der ausgewählten Schwachstellentestmaschine, wobei das Crawler-Anfragedatensignal eine Crawler-Anfrage der ausgewählten Schwachstellentestmaschine an die Netzwerkapplikation repräsentiert; (iii-3) Weiterleiten des Crawler-Anfragedatensignals an die Netzwerkapplikation über das Netzwerk; (iii-4) Erhalten eines Crawler-Antwortdatensignals von der Netzwerkapplikation über das Netzwerk für das weitergeleitete Crawler-Anfragedatensignale an die Netzwerkapplikation über das Netzwerk, wobei das Crawler-Antwortdatensignal eine Antwort der Netzwerkapplikation auf das Crawler-Anfragedatensignal repräsentiert; und (iii-5) Extrahieren von zusätzlichen Netzwerkadressen der Netzwerkapplikation aus dem Crawler-Antwortdatensignal. Insbesondere können diese Unterschritte in effizienter Weise von der Steuerungskomponente und dem Proxydienst ausgeführt werden.

Unter dem Begriff "Crawler" beziehungsweise Webcrawler wird in diesem Zusammenhang eine Computerapplikation verstanden, die automatisch das Netzwerk beziehungsweise das W3 durchsucht und auf dem Netzwerk vorhandene Informationen beziehungsweise Webseiten analysiert. Beispielsweise werden typischerweise Webcrawler von Suchmaschinen zur Indexierung von Webseiten eingesetzt. Auch die meisten Schwachstellentestmaschinen sind mit einem Crawler zu Beschaffung von Infomationen wie beispielsweise zusätzlicher Netzwerkadressen ausgestattet. Jedoch ist die Qualität der in unterschiedlichen Schwachstellentestmaschinen sehr verschieden.

Mittels der Unterschritte (iii-1)-(iii-5) kann der Crawler einer oder mehrerer der Schwachstellentestmaschinen genutzt werden, um die zusätzlichen Netzwerkadressen zu ermitteln. So können die Crawler-Ergebnisse eines oder mehrerer ausgewählter Schwachstellentestmaschinen allen Schwachstellentestmaschinen zur Verfügung gestellt werden, was die Qualität der gesamten Vulnerabilitätsprüfung des Computersystems erheblich erhöhen kann.

Weiter kann Schritt (iii) des Verfahrens Unterschritte zum Ermitteln von weiteren zusätzlichen URL aus einem Quelltext der Netzwerkapplikation umfassen. Dazu wird ein Quelltextdatensignal, das den Quelltext der Netzwerkapplikation oder eines Teiles davon repräsentiert, bezogen und daraus die weiteren zusätzlichen Netzwerkadressen extrahiert.

Vorzugsweise werden in Schritt (vi) des Penetrationstestverfahrens die initialen Antwortdatensignale vom Proxydienst über das Netzwerk empfangen und in Schritt (viii) die erweiterten initialen Antwortdatensignale vom Proxydienst über das Verbindungsframework des Proxydienstes an die Schwachstellentestmaschinen übermittelt.

In einer bevorzugten Ausführungsform umfasst das Penetrationstestverfahren weiter die Schritte: Identifizieren einer Abmeldekomponente in Anfragedatensignalen und/oder Antwortdatensignalen; Deaktivieren der Abmeldekomponente; und Übermitteln der Anfragedatensignale oder der Antwortdatensignale an die Netzwerkapplikation beziehungsweise an die Schwachstellentestmaschinen. Das Deaktivieren kann beispielsweise durch Entfernen der Abmeldekomponente oder durch Ändern erfolgen. Die Anfrage- beziehungsweise Antwortdatensignale können die initialen Datensignale sein und/oder Datensignale, die beim effektiven Testen der Netzwerkapplikation durch die Testmaschinen eingesetzt werden.

Bei bekannten Schwachstellentestmaschinen besteht häufig ein Problem darin, dass während des Testens einer Netzwerkapplikation eine Abmeldung (Logout) erfolgt beispielsweise durch Aktivierung eines entsprechenden Ereignisses der Netzwerkapplikation oder durch eine Zeitüberschreitung. Mit den vorstehend aufgelisteten Schritten kann ein solches Abmelden vom Proxydienst automatisiert verhindert werden. Damit können die Testläufe der Schwachstellentestmaschinen zu Ende geführt werden, was die Qualität der Prüfung und somit die Sicherheit des Computersystems erhöhen kann.

In einer weiteren bevorzugten Ausführungsform umfasst das Penetrationstestverfahren ein Identifizieren einer Schwachstelle des Computersystems und ein Beheben der Schwachstelle auf dem Computersystem. Insbesondere kann die Schwachstelle automatisiert beispielsweise direkt von der Steuerungskomponente behoben werden. Dadurch kann die Sicherheit des Computersystems automatisiert verbessert werden.

Das Beheben der Schwachstelle kann beispielsweise dadurch erfolgen, dass die Steuerungskomponente einen Patch erstellt, der auf das Computersystem übertragen und von diesem ausgeführt wird. Bei Webapplikationen kann der Patch insbesondere eine Web Application Firewall (WAF) sein.

In einem anderen Aspekt ist die Erfindung ein Computerprogram, das Programmbefehle umfasst, die bei der Ausführung des Programms durch einen Computer diesen veranlassen, Schritte des oben beschriebenen erfindungsgemässen Penetrationstestverfahren oder seiner bevorzugten Ausführungsformen auszuführen. Die mittels des Computerprogramms ausgeführten Schritte können insbesondere alle Schritte des erfindungsgemässen Penetrationstestverfahrens oder einer bevorzugten Ausführungsform davon umfassen.

In einem anderen weiteren Aspekt ist die Erfindung eine Vorrichtung zur Datenverarbeitung, die einen Computer mit einem Prozessor umfasst, der so konfiguriert ist, dass er die Schritte des oben beschriebenen erfindungsgemässen Penetrationstestverfahrens oder seiner bevorzugten Ausführungsformen ausführt. Insbesondere können der Computer mit einem Proxydienst und einer Steuerungskomponente wie oben beschrieben ausgestattet sein, wobei der Proxydienst und die Steuerungskomponente dazu ausgebildet sind, das Penetrationstestverfahren auszuführen.

Mit dem erfindungsgemässen Computerprogramm und der erfindungsgemässen Vorrichtung können die Effekte und Vorteile des erfindungsgemässen Penetrationstestverfahrens und dessen bevorzugter Ausführungsformen effizient erreicht werden.

### Kurze Beschreibung der Zeichnungen

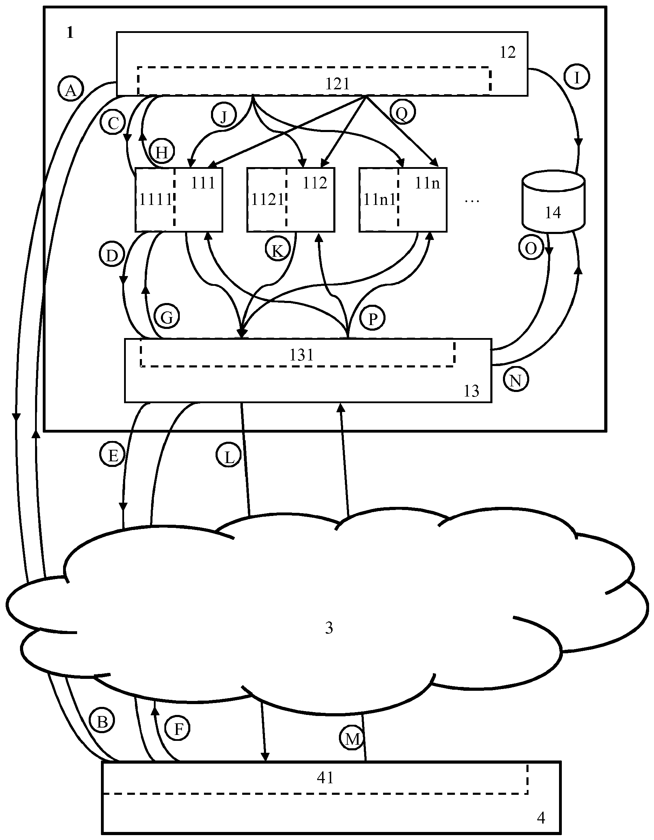

Weitere vorteilhafte Ausgestaltungen der Erfindung ergeben sich aus der nachfolgenden Beschreibung von Ausführungsbeispielen der Erfindung mit Hilfe der schematischen Zeichnung. Insbesondere werden im Folgenden die erfindungsgemässe Vorrichtung, das erfindungsgemässe Penetrationstestverfahren und das erfindungsgemässe Computerprogramm unter Bezugnahme auf die beigefügte Zeichnung anhand von Ausführungsbeispielen detaillierter beschrieben. Es zeigt die Fig. ein schematisches Blockdiagramm eines Ausführungsbeispiels einer erfindungsgemässen Vorrichtung zur Ausführung eines Ausführungsbeispiels eines erfindungsgemässen Penetrationstestverfahrens mittels eines Ausführungsbeispiels eines erfindungsgemässen Computerprogramms.

### Weq(e) zur Ausführung der Erfindung

Die Fig. zeigt einen Testcomputer 1 als Ausführungsbeispiel einer erfindungsgemässen Vorrichtung zur Datenverarbeitung. Auf dem Testcomputer 1 sind eine Anzahl n unterschiedlicher Schwachstellentestmaschinen 11 vorgesehen, umfassend eine erste Schwachstellentestmaschine 111, eine zweite Schwachstellentestmaschine 112, eine dritte Schwachstellentestmaschine 113 und eine n-te Schwachstellentestmaschine 11n. Beispielsweise können n=7 Schwachstellentestmaschinen auf dem Testcomputer 1 eingerichtet sein. Jede der Schwachstellentestmaschinen 111, 112, 113, 11n ist mit einem Webcrawler 1111, 1121, 1131, 11n1 ausgestattet.

Der Testcomputer 1 ist an das World Wide Web (W3 beziehungsweise WWW) 3 als Netzwerk angeschlossen. Ebenfalls an das WWW 3 ist ein zu prüfendes Computersystem 4 angeschlossen, auf dem eine Webapplikation 41 als Netzwerkapplikation ausgeführt wird. Der Testcomputer 1 umfasst eine Datenbank 14.

Auf dem Testcomputer 1 ist ein Ausführungsbeispiel eines erfindungsgemässen Computerprogramms ausgeführt, das auf dem Testcomputer 1 einen Proxydienst 13 und ein Steuerungskomponente 12 implementiert. Der Proxydienst 13 weist ein Verbindungsframework 131 auf, das für jede der Schwachstellentestmaschinen 11 einen spezifischen Verbinder zur Kommunikation mit der zugehörigen Schwachstellentestmaschine 11n umfasst. Der Proxydienst 13 ist für jede der Schwachstellentestmaschinen 11 als einzelne Instanz ausgeführt. In analoger Weise ist die Steuerungskomponente 12 mit einem Verbindungsframework 121 zur Verbindung mit den Schwachstellentestmaschinen 11 ausgestattet.

Auf dem Testcomputer 1 wird ein Ausführungsbeispiel eines erfindungsgemässen Penetrationstestverfahren (Pentest) wie folgt ausgeführt. Die Steuerungskomponente 12 stellt ein Interface zur Verfügung, über das ein Adressdatensignal, das eine URL der Webapplikation 41 repräsentiert, erfasst wird. In einem Schritt A sendet die Steuerungskomponente 12 ein Vorabanfragedatensignal, das einen Vorab-Request als Vorabanfrage repräsentiert, direkt über das WWW 3 an die Webapplikation 41. In einem Schritt B beantwortet die Webapplikation 41 den Vorab-Request und sendet ein Vorabantwortdatensignal, das eine Vorab-Response als Vorabantwort repräsentiert, direkt über das WWW 3 an die Webapplikation 41 zurück. Die Steuerungskomponente 12 analysiert die Vorab-Response und extrahiert zusätzliche URL der Webapplikation 41 aus ihr. In einer alternativen Ausführung laufen die Schritte A und B nicht direkt zwischen Steuerungskomponente 12 und Webapplikation 41, sonder über den Proxydienst 13.

In einem Schritt C leitet die Steuerungskomponente 12 ein Crawler-Aufrufdatensignal an die erste Schwachstellentestmaschine 111, das einen Aufruf des Webcrawlers 1111 repräsentiert. Der Proxydienst 13 erhält in einem Schritt D ein Crawler-Anfragedatensignal von der ersten Schwachstellentestmaschine 111, wobei das Crawler-Anfragedatensignal eine Crawler-Anfrage des Webcrawlers 1111 an die Netzwerkapplikation 41 repräsentiert. In einem Schritt E leitet der Proxydienst 13 des Crawler-Anfragedatensignals an die Webapplikation 41 über das WWW 3 weiter. In einem Schritt F erhält der Proxydienst 13 ein Crawler-Antwortdatensignals von der Webapplikation 41 über das WWW 3, wobei das Crawler-Antwortdatensignal eine Antwort der Webapplikation 41 auf das Crawler-Anfragedatensignal repräsentiert. In einem Schritt G wird das Crawler-Antwortdatensignal an die erste Schwachstellentestmaschine 111 und von dort in einem Schritt H an die Steuerungskomponente 12 weitergeleitet. Die Steuerungskomponente 12 analysiert das Crawler-Antwortdatensignal und extrahiert weitere zusätzliche URL der Webapplikation aus ihm. Alle von der Steuerungskomponente 12 mittels direkter Vorabanfrage und mittels Webcrawler 1111 der ersten Schwachstellentestmaschine 111 ermittelten zusätzlichen Netzwerkadressen werden in einem Schritt I in der Datenbank 14 des Testcomputers 1 gespeichert.

Zusätzlich zum Ermitteln von zusätzlichen URL gemäss der Schritte A bis H kann der Steuerungskomponente 12 der Quelltext der Webapplikation zur Verfügung gestellt werden. Die Steuerungskomponente 12 extrahiert aus dem Quelltext weitere zusätzliche URL und speichert sie in Schritt I in der Datenbank 14 des Testcomputers 1.

Die Steuerungskomponente 12 erzeugt nun ein Aufrufdatensignal aus dem Adressdatensignal, das einen Aufruf an die Schwachstellentestmaschinen 11 repräsentiert. In einem Schritt J leitet sie das Aufrufdatensignal an die Schwachstellentestmaschinen 11 über ihr Verbindungsframework 121. Aufgrund dieser Aufrufdatensignale übermitteln die Schwachstellentestmaschinen 11 in einem Schritt K initiale Anfragedatensignale, die jeweils eine initiale Anfrage (Request) der zugehörigen Schwachstellentestmaschine 11 an die Webapplikation 14 repräsentieren, über das Verbindungsframework 131 an den Proxydienst 13. In einem Schritt L leitet der Proxydienst 13 die initialen Anfragedatensignale an die Webapplikation 41 über das WWW 3 weiter. Die Webapplikation 41 übersendet darauf ein einem Schritt M initiale Antwortdatensignale über das WWW 3 an den Proxydienst 13. Die initialen Antwortdatensignale repräsentieren jeweils eine initiale Antwort (Response) der Webapplikation 41 auf die initiale Anfrage der zugehörigen Schwachstellentestmaschine 11.

In einem Schritt N fragt der Proxydienst die Datenbank 14 nach den zusätzlichen URL und bezieht diese in einem Schritt O aus der Datenbank 14. Mit den zusätzlichen URL erzeugt der Proxydienst 13 erweiterte initiale Antwortdatensignale, indem er die zusätzlichen URL den empfangenen initialen Antwortdatensignalen zufügt.

In einem Schritt P übermittelt der Proxydienst 13 die erweiterten initialen Antwortdatensignale an die Schwachstellentestmaschinen 11. Diese suchen nun nach Schwachstellen der Webapplikation 41 unter Verwendung der URL und der zusätzlichen URL. Insbesondere werden dabei eine grosse Anzahl von weiteren Anfragedatensignalen und weiteren Antwortdatensignale über den Proxydienst zwischen den Schwachstellentestmaschinen 11 und der Webapplikation 41 ausgetauscht. Im gesamten Austausch zwischen Schwachstellentestmaschinen 11 und Webapplikation 41 sucht der Proxydienst 13 nach Abmeldekomponenten in den Anfragedatensignalen und den Antwortdatensignalen. Sobald er dabei fündig wird, deaktiviert er diese, indem er sie beispielsweise entfernt.

Jeder der Schwachstellentestmaschinen 11 wertet die Resultate ihrer Testläufe aus. Die Steuerungskomponente 12 bezieht in einem Schritt Q zugehörige Auswertungsdatensignale der Schwachstellentestmaschinen 11, normalisiert, korreliert und aggregiert diese zu einem Masterauswertungsdatensignal. Mittels des Masterauswertungsdatensignals kann die Steuerungskomponente 12 automatisch einen Patch wie beispielsweise für eine WAF erstellen, das dem Computersystem 4 automatisch zugefügt wird.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können, ohne den Umfang der folgenden Ansprüche zu verlassen. Insbesondere deckt die vorliegende Erfindung weitere Ausführungsbeispiele mit irgendwelchen Kombinationen von Merkmalen ab, die von den explizit beschriebenen Merkmalskombinationen abweichen können.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfasst sowie auch solche, die zusätzliche andere Merkmale umfassen.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein.

Ein Computerprogramm kann auf einem geeigneten Medium gespeichert sein und/oder vertrieben werden, wie beispielsweise auf einem optischen Speichermedium oder einem Festmedium, das zusammen mit oder als Teil von anderer Hardware bereitgestellt wird. Es kann auch in anderer Form vertrieben werden, wie beispielsweise über das Internet oder andere verkabelte oder unverkabelte Telekommunikationssysteme. Insbesondere kann ein Computerprogramm beispielsweise ein auf einem computerlesbaren Medium gespeichertes Computerprogrammprodukt sein, das dazu ausgestaltet ist, ausgeführt zu werden, um ein Verfahren zu implementieren, insbesondere das erfindungsgemässe Verfahren. Alle Bezugszeichen in den Ansprüchen sind nicht als den Umfang der Ansprüche einschränkend zu verstehen.

## Patentansprüche

1. Computerimplementiertes Penetrationstestverfahren zum Prüfen der Vulnerabilität eines Computersystems (4), umfassend
(i) Bereitstellen eines Proxydienstes (13) auf einem Computer, wobei der Proxydienst (13) ein Verbindungsframework (131) umfasst, das dazu ausgestaltet ist, den Proxydienst (13) mit einer Mehrzahl von verschiedenen Schwachstellentestmaschinen (11), die über spezifische proprietäre Computeranwendungen implementiert sind, zu verbinden,
(ii) Beziehen eines Adressdatensignals, das eine Netzwerkadresse einer auf dem zu prüfenden Computersystem (4) ausgeführten Netzwerkapplikation (41) in einem Netzwerk (3) repräsentiert,
(iii) Ermitteln von zusätzlichen Netzwerkadressen der Netzwerkapplikation (41) im Netzwerk (3),
(iv) Erhalten von initialen Anfragedatensignalen von den Schwachstellentestmaschinen (11) durch den Proxydienst (13) über das Verbindungsframework (131) des Proxydienstes (13), wobei die initialen Anfragedatensignale jeweils eine initiale Anfrage der zugehörigen Schwachstellentestmaschinen (11) an die Netzwerkapplikation (41) repräsentiert,
(v) Weiterleiten der initialen Anfragedatensignale an die Netzwerkapplikation (41) durch den Proxydienst (13) über das Netzwerk (3),
(vi) Erhalten initialer Antwortdatensignale von der Netzwerkapplikation (41) auf das weitergeleitete initiale Anfragedatensignal durch den Proxydienst (13) über das Netzwerk (3), wobei die initialen Antwortdatensignale jeweils eine initiale Antwort der Netzwerkapplikation (41) auf die initiale Anfrage der zugehörigen Schwachstellentestmaschine (11) repräsentiert,
(vii) Erzeugen erweiterter initialer Antwortdatensignale durch den Proxydienst (13) über Hinzufügen der zusätzlichen Netzwerkadressen in die initialen Antwortdatensignale, und
(viii) Übermitteln der erweiterten initialen Antwortdatensignale an die
Mehrzahl von Schwachstellentestmaschinen.

2. Penetrationstestverfahren nach Anspruch 1, weiter umfassend:
Bereitstellen einer Steuerungskomponente auf dem Computer, wobei die Steuerungskomponente ein Verbindungsframework (121) aufweist, das dazu ausgestaltet ist, die Steuerungskomponente mit der Mehrzahl von Schwachstellentestmaschinen (11) zu verbinden,
Erzeugen eines Aufrufdatensignals aus dem Adressdatensignal durch die Steuerungskomponente, und
Weiterleiten des Aufrufdatensignals an die Mehrzahl von Schwachstellentestmaschinen (11) durch die Steuerungskomponente über das Verbindungsframework (121) der Steuerungskomponente,
wobei die Schwachstellentestmaschinen (11) aufgrund des Aufrufdatensignals die initialen Anfragedatensignale über das Verbindungsframework (131) des Proxydienstes (13) an den Proxydienst (13) übermitteln.

3. Penetrationstestverfahren nach Anspruch 2, bei dem Schritt (iii) von der Steuerungskomponente ausgeführt wird, wobei die Steuerungskomponente ein Adresskonfigurationsdatensignal erzeugt, das an den Proxydienst (13) übermittelt wird.

4. Penetrationstestverfahren nach Anspruch 2 oder 3, bei dem die Steuerungskomponente Auswertungsdatensignale von jeder der Schwachstellentestmaschinen (11) bezieht, wobei die Auswertungsdatensignale jeweils eine Auswertung der Antwortdatensignale jeweils durch die zugehörige Schwachstellentestmaschine (11) repräsentieren.

5. Penetrationstestverfahren nach Anspruch 4, bei dem die Steuerungskomponente die Auswertungsdatensignale der Schwachstellentestmaschinen zu einem Masterauswertungsdatensignal aggregiert.

6. Penetrationstestverfahren gemäss einem der vorangehenden Ansprüche, wobei Schritt (iii) umfasst:
Weiterleiten eines Crawler-Aufrufdatensignals an eine ausgewählte Schwachstellentestmaschine (11) der Mehrzahl von Schwachstellentestmaschinen,
Erhalten eines Crawler-Anfragedatensignals von der ausgewählten Schwachstellentestmaschine, wobei das Crawler-Anfragedatensignal eine Crawler-Anfrage der ausgewählten Schwachstellentestmaschine (11) an die Netzwerkapplikation (41) repräsentiert,
Weiterleiten des Crawler-Anfragedatensignals an die Netzwerkapplikation (41) über das Netzwerk (3),
Erhalten eines Crawler-Antwortdatensignals von der Netzwerkapplikation (41) über das Netzwerk (3) für das weitergeleitete Crawler-Anfragedatensignal an die Netzwerkapplikation (41) über das Netzwerk (3), wobei das Crawler-Antwortdatensignal eine Antwort der Netzwerkapplikation (41) auf das Crawler-Anfragedatensignal repräsentiert, und
Extrahieren von den zusätzlichen Netzwerkadressen der Netzwerkapplikation (41) aus dem Crawler-Antwortdatensignal.

7. Penetrationstestverfahren nach einem der vorangehenden Ansprüche, wobei in Schritt (vi) die initialen Antwortdatensignale vom Proxydienst (13) über das Netzwerk (3) empfangen werden und in Schritt (viii) die erweiterten initialen Antwortdatensignale vom Proxydienst (13) über das Verbindungsframework (131) des Proxydienstes (13) an die Schwachstellentestmaschinen übermittelt werden.

8. Penetrationstestverfahren nach einem der vorangehenden Ansprüche, umfassend die Schritte:
Identifizieren einer Abmeldekomponente in Anfragedatensignalen und/oder Antwortdatensignalen,
Deaktivieren der Abmeldekomponente, und
Übermitteln der Anfragedatensignale oder der Antwortdatensignale an die Netzwerkapplikation (41) beziehungsweise an die Schwachstellentestmaschinen.

9. Penetrationstestverfahren nach einem der vorangehenden Ansprüche, umfassend: Identifizieren einer Schwachstelle des Computersystems (4) und Beheben der Schwachstelle auf dem Computersystem.

10. Computerprogram, das Programmbefehle umfasst, die bei der Ausführung des Programms durch einen Computer diesen veranlassen, Schritte des Penetrationstestverfahrens nach einem der vorangehenden Ansprüche auszuführen.

## Claims

1. Computer-implemented penetration test method for checking the vulnerability of a computer system (4), comprising
(i) providing a proxy service (13) on a computer, wherein the proxy service (13) comprises a connection framework (131) which is designed to connect the proxy service (13) to a plurality of different vulnerability testing machines (11) that are implemented via specific proprietary computer applications,
(ii) acquiring an address data signal which represents a network address of a network application (41) in a network (3), which network application is executed on the computer system (4) to be tested,
(iii) determining additional network addresses of the network application (41) in the network (3),
(iv) obtaining initial request data signals from the vulnerability testing machines (11) by means of the proxy service (13) via the connection framework (131) of the proxy service (13), wherein the initial request data signals each represent an initial request of the associated vulnerability testing machines (11) to the network application (41),
(v) forwarding the initial request data signals to the network application (41) by means of the proxy service (13) via the network (3),
(vi) obtaining initial response data signals from the network application (41) to the forwarded initial request data signal by means of the proxy service (13) via the network (3), wherein the initial response data signals each represent an initial response of the network application (41) to the initial request of the associated vulnerability testing machine (11),
(vii) generating extended initial response data signals by means of the proxy service (13) by adding the additional network addresses to the initial response data signals, and
(viii) transmitting the extended initial response data signals to the plurality of vulnerability testing machines.

2. Penetration test method according to claim 1, further comprising:
providing a control component on the computer, the control component having a connection framework (121) which is designed to connect the control component to the plurality of vulnerability testing machines (11),
generating a call data signal from the address data signal by means of the control component, and
forwarding the call data signal to the plurality of vulnerability testing machines (11) by means of the control component via the connection framework (121) of the control component,
wherein the vulnerability testing machines (11) transmit, on the basis of the call data signal, the initial request data signals to the proxy service (13) via the connection framework (131) of the proxy service (13).

3. Penetration test method according to claim 2, wherein step (iii) is performed by the control component, the control component generating an address configuration data signal that is transmitted to the proxy service (13).

4. Penetration test method according to either claim 2 or claim 3, wherein the control component acquires evaluation data signals from each of the vulnerability testing machines (11), the evaluation data signals each representing an evaluation of the response data signals by the associated vulnerability testing machine (11).

5. Penetration test method according to claim 4, wherein the control component aggregates the evaluation data signals of the vulnerability testing machines to form a master evaluation data signal.

6. Penetration test method according to any of the preceding claims, wherein step (iii) comprises:
forwarding a crawler call data signal to a selected vulnerability testing machine (11) of the plurality of vulnerability testing machines,
obtaining a crawler request data signal from the selected vulnerability testing machine, wherein the crawler request data signal represents a crawler request of the selected vulnerability testing machine (11) to the network application (41),
forwarding the crawler request data signal to the network application (41) via the network (3),
obtaining a crawler response data signal from the network application (41) via the network (3) for the forwarded crawler request data signal to the network application (41) via the network (3), wherein the crawler response data signal represents a response of the network application (41) to the crawler request data signal, and
extracting the additional network addresses of the network application (41) from the crawler response data signal.

7. Penetration test method according to any of the preceding claims, wherein in step (vi) the initial response data signals are received by the proxy service (13) via the network (3), and in step (viii) the extended initial response data signals are transmitted by the proxy service (13) via the connection framework (131) of the proxy service (13) to the vulnerability testing machines.

8. Penetration test method according to any of the preceding claims, comprising the steps of:
identifying a logoff component in request data signals and/or response data signals,
deactivating the logoff component, and
transmitting the request data signals or the response data signals to the network application (41) or to the vulnerability testing machines.

9. Penetration test method according to any of the preceding claims, comprising: identifying a vulnerability of the computer system (4) and resolving the vulnerability on the computer system.

10. Computer program comprising program instructions that, when the program is executed by a computer, cause the computer to carry out steps of the penetration test method according to any of the preceding claims.

## Revendications

1. Procédé de test d'intrusion mis en oeuvre par ordinateur pour le contrôle de la vulnérabilité d'un système informatique (4), comprenant
(i) la fourniture d'un service proxy (13) sur un ordinateur, le service proxy (13) comprenant une infrastructure de connexion (131), qui est conçue pour connecter le service proxy (13) à une pluralité de différentes machines de test de vulnérabilités (11), qui sont mises en oeuvre par le biais d'applications informatiques propriétaires spécifiques,
(ii) l'obtention d'un signal de données d'adresse, qui représente une adresse de réseau dans un réseau (3) d'une application de réseau (41) exécutée sur le système informatique (4) à contrôler,
(iii) la détermination d'adresses de réseau supplémentaires de l'application de réseau (41) dans le réseau (3),
(iv) la réception de signaux initiaux de données de requête à partir des machines de test de vulnérabilités (11) par le service proxy (13) par le biais de l'infrastructure de connexion (131) du service proxy (13), les signaux initiaux de données de requête représentant respectivement une requête initiale des machines de test de vulnérabilités (11) correspondantes à l'application de réseau (41),
(v) la retransmission des signaux initiaux de données de requête à l'application de réseau (41) par le service proxy (13) par le biais du réseau (3),
(vi) la réception à partir de l'application de réseau (41) de signaux initiaux de données de réponse au signal initial de données de requête retransmis par le service proxy (13) par le biais du réseau (3), les signaux initiaux de données de réponse représentant respectivement une réponse initiale de l'application de réseau (41) à la requête initiale de la machine de test de vulnérabilités (11) correspondante,
(vii) la génération de signaux initiaux de données de réponse étendus par le service proxy (13) par l'intermédiaire de l'ajout des adresses de réseau supplémentaires dans les signaux initiaux de données de réponse, et
(viii) la transmission des signaux initiaux de données de réponse étendus à la pluralité de machines de test de vulnérabilités.

2. Procédé de test d'intrusion selon la revendication 1, comprenant en outre :
la fourniture d'un composant de commande sur l'ordinateur, le composant de commande présentant une infrastructure de connexion (121) qui est conçue pour connecter le composant de commande à la pluralité de machines de test de vulnérabilités (11),
la génération d'un signal de données d'appel à partir du signal de données d'adresse par le composant de commande, et
la retransmission du signal de données d'appel à la pluralité de machines de test de vulnérabilités (11) par le composant de commande par le biais de l'infrastructure de connexion (121) du composant de commande,
les machines de test de vulnérabilités (11) transmettant en raison du signal de données d'appel les signaux initiaux de données de requête par le biais de l'infrastructure de connexion (131) du service proxy (13) au service proxy (13).

3. Procédé de test d'intrusion selon la revendication 2, dans lequel l'étape (iii) est exécutée par le composant de commande, le composant de commande générant un signal de données de configuration d'adresse, qui est transmis au service proxy (13).

4. Procédé de test d'intrusion selon la revendication 2 ou 3, dans lequel le composant de commande obtient des signaux de données d'évaluation à partir de chacune des machines de test de vulnérabilités (11), les signaux de données d'évaluation représentant respectivement une évaluation des signaux de données de réponse respectivement par la machine de test de vulnérabilités (11) correspondante.

5. Procédé de test d'intrusion selon la revendication 4, dans lequel le composant de commande agrège les signaux de données d'évaluation des machines de test de vulnérabilités en un signal maître de données d'évaluation.

6. Procédé de test d'intrusion selon l'une des revendications précédentes, l'étape (iii) comprenant :
la retransmission d'un signal de données d'appel de Crawler à une machine de test de vulnérabilités (11) sélectionnée de la pluralité de machines de test de vulnérabilités,
la réception d'un signal de données de requête de Crawler à partir de la machine de test de vulnérabilités sélectionnée, le signal de données de requête de Crawler représentant une requête de Crawler de la machine de test de vulnérabilités (11) sélectionnée à l'application de réseau (41),
la retransmission du signal de données de requête de Crawler à l'application de réseau (41) par le biais du réseau (3),
la réception d'un signal de données de réponse de Crawler à partir de l'application de réseau (41) par le biais du réseau (3) pour le signal de données de requête de Crawler retransmis à l'application de réseau (41) par le biais du réseau (3), le signal de données de réponse de Crawler représentant une réponse de l'application de réseau (41) au signal de données de requête de Crawler, et
l'extraction des adresses de réseau supplémentaires de l'application de réseau (41) à partir du signal de données de réponse de Crawler.

7. Procédé de test d'intrusion selon l'une des revendications précédentes, dans l'étape (vi) les signaux initiaux de données de réponse étant reçus par le service proxy (13) par le biais du réseau (3) et dans l'étape (viii) les signaux initiaux de données de réponse étendus étant transmis par le service proxy (13) par le biais de l'infrastructure de connexion (131) du service proxy (13) aux machines de test de vulnérabilités.

8. Procédé de test d'intrusion selon l'une des revendications précédentes, comprenant les étapes :
d'identification d'un composant de déconnexion dans les signaux de données de requête et/ou les signaux de données de réponse,
de désactivation du composant de déconnexion et
de transmission des signaux de données de requête ou des signaux de données de réponse à l'application de réseau (41) ou aux machines de test de vulnérabilités.

9. Procédé de test d'intrusion selon l'une des revendications précédentes, comprenant : l'identification d'une vulnérabilité du système informatique (4) et la réparation de la vulnérabilité dans le système informatique.

10. Programme informatique, lequel comprend des commandes de programme, qui, lors de l'exécution du programme par un ordinateur, amènent celui-ci à exécuter les étapes du procédé de test d'intrusion selon l'une des revendications précédentes.
